Europäisches Patentamt

European Patent Office

Office européen des brevets

(11) Publication number: **0 302 711**
**A2**

# EUROPEAN PATENT APPLICATION

(21) Application number: 88307161.5

(22) Date of filing: 03.08.88

(51) Int. Cl.⁴: **B 32 B 27/08**
**B 65 D 65/40**

(30) Priority: 05.08.87 US 81789

(43) Date of publication of application:
08.02.89 Bulletin 89/06

(84) Designated Contracting States:
AT BE CH DE ES FR GB GR IT LI LU NL SE

(71) Applicant: AMERICAN NATIONAL CAN COMPANY
8101 West Higgins Road
Chicago Illinois 60631 (US)

(72) Inventor: Bauer, Frank Templeton
1 Lawrence Court
Appleton Winsconsin 54911 (US)

(74) Representative: Harvey, David Gareth et al
Graham Watt & Co. Riverhead
Sevenoaks Kent TN13 2BN (GB)

(54) Miltiple layer packaging films.

(57) A multiple layer film comprises a first layer of vinylidene chloride copolymer having a first softening temperature. A second polymeric sealant layer has a second softening temperature no more than 20°C less than the first softening temperature. A third layer is between the first and second layers, the third layer having a third softening temperature greater than the first and second softening temperatures. A fourth layer has a fourth softening temperature greater than the first and second softening temperatures. The first layer is positioned between the third and fourth layers. All the layers of the film are adhered respectively to each other. The composition of the second layer preferably comprises a polypropylene polymer, or other higher softening temperature polymer composition. The composition for the third layer is preferably selected from polycarbonates, polyamides, polypropylenes, and polyethylenes. The composition for the fourth layer is preferably selected from among polyesters, polycarbonates, polyamides, and polypropylenes. The films of the invention are useful for the fabrication of closed packages.

FIG. 1

## Description

## MULTIPLE LAYER PACKAGING FILMS

This invention relates to multiple layer films, and especially multiple layer packaging films which are used to fabricate packages through the formation of heat seals about the periphery of the package. The invention is particularly related to those films which use a layer of vinylidene chloride copolymer as an interior layer in the film and a polymeric composition which typically has a softening temperature similar to, or higher than, that of the vinylidene chloride copolymer as an exterior layer of the film. The exterior layer is adapted for use in formation of heat seals.

In forming heat seals in such films, the amount of heat which is driven through the film to the sealant layer to soften that layer sufficiently for formation of heat seals also, as a secondary, and undesirable, function, is sufficiently intense to significantly soften the vinylidene chloride copolymer layer during the formation of the heat seals.

Packages made with such films are somewhat deficient in impact resistance; especially packages where such films are used as closure lids on formed trays. In such applications, the lid is the weakest member of the package, such that any failure of the package typically occurs in the lid film adjacent the heat seal.

"Softening temperature" as used herein can be interpreted as any determinant and measurable temperature which identifies a condition at which the polymer experiences a change which tends to make it more fluid, and subject to flowing at normal conditions used in forming heat seals. While the DSC melting point is generally referred to herein, other tests could equally well be used so long as they are applied equally to all the layers being compared.

It is an object of this invention to provide improved multiple layer polymeric films having an interior layer of a vinylidene chloride copolymer in combination with a sealant layer, and wherein the sealant layer composition has a softening temperature similar to, or higher than, the softening temperature of the vinylidene chloride copolymer layer, and wherein the improved multiple layer films of the invention have increased impact resistance at the heat seal locus, while maintaining the ability, in the films, to form strong heat seals.

It is yet another object of the invention to provide such films without significantly increasing the amount, or the cost, of the materials used, or the overall thickness of the films.

These and other objects of the invention are attained in multiple layer films having four or more layers. The first layer comprises a vinylidene chloride copolymer having a first softening temperature. A second polymeric sealant layer has a second softening temperature no more than about 20°C less than the first softening temperature. A third layer, between the first and second layers, has a third softening temperature greater than the first and second softening temperatures. A fourth layer has a fourth softening temperature greater than the first and second softening temperatures. The first layer is between the third and fourth layers. All the layers of the film are adhered respectively to each other.

Functionally, heat seals are formed with the films of the invention by applying a combination of heat and pressure through the fourth layer to soften the second layer and form the heat seals. During that formation of heat seals, the first layer is also softened to the point that conventional amounts of pressure during the sealing tend to thin the first layer. The third layer is not softened to the point of thinning under those conditions.

It is preferred that the composition of the third layer be selected from the group consisting of polyesters, polycarbonates, polyamides, polypropylenes, and polyethylenes. An especially preferred composition for the third layer comprises polyethylene terephthalate (PET), but when PET is the third layer, the first layer is other than a vinylidene chloride/vinyl chloride copolymer.

An especially desirable composition for the second layer comprises a polypropylene copolymer. Also acceptable for the second layer are polymers, such as high density polyethylene, whose melting point temperature is below the melting point temperature of both the third and fourth layers while being similar to, or above, that of the first layer.

Preferred compositions for the fourth layer are selected from among polyesters, polycarbonates, polyamides, and polypropylenes. A highly preferred material for the fourth layer is polyethylene terephthalate, which may be the same composition as used for the third layer.

In some embodiments of the films of this invention, it is preferred that the third layer be bonded directly to the first and second layers, optionally through the use of intervening adhesive layers. The fourth layer may also be bonded directly to the first layer.

The films of the invention are adapted to readily be made into packages, or to be used in combination with other films or sheet structures in the fabrication of packages.

Embodiments of the invention will now be described in more detail, by way of example only, in the following description which is to be read in conjunction with the accompanying drawings, in which:

FIGURE 1 is a cross-section of a four layer film representative of the films of this invention;

FIGURE 2 shows a cross-section of a three layer prior art structure;

FIGURE 3 is a pictorial view of a pouch made with a multiple layer film of this invention; and

FIGURE 4 is a cross-section of a package using a film of this invention as a closure lid.

We have discovered that, in films where the softening temperature of the sealant layer is substantially below the softening temperature of the vinylidene chloride copolymer, for example a difference of 50°C, the amount of heat required to activate the sealant layer is not sufficient to soften the vinylidene chloride copolymer; and so this invention is not needed in those applications. Sealing layer compositions whose softening temperature more closely approaches that of the vinylidene chloride copolymer require relatively more heat to activate them. It should be comprehended that the sealing heat is conducted through the (susceptible) vinylidene chloride copolymer layer in order to reach the sealing layer. This creates a temperature gradient between the susceptible layer and the sealing layer. Also the susceptible layer experiences the heat for a longer period of time than the sealing layer. Thus the higher temperature experienced over a longer period of time, by the susceptible layer, as compared to the sealing layer, means that the susceptible layer may experience a significant softening even though its softening temperature is equal to or a little above the corresponding softening temperature of the sealing layer. The amount by which the softening temperature of the susceptible layer may be above that of the sealing layer, and still be subject to being softened, depends on the temperature of the seal bar applied at the outer layer of the film. If a relatively lower temperature is used on the seal bar, lower temperature is experienced by the susceptible layer, and a lesser degree of susceptibility exists. But a lower temperature requires longer sealing time. So in the interest of time economy, a higher temperature is often used. Indeed a temperature gradient of as much as 30° - 40°C may be used. The susceptible layer may experience, for example, about half of the above gradient, depending, of course, on details of the specific film structure. So films wherein the softening temperature of the susceptible layer is similar to that of the sealing layer, namely up to about 20°C above the corresponding temperature for the sealant layer, or below that of the sealing layer, experience the susceptibility addressed in the instant invention, and are thus included within the scope of the invention.

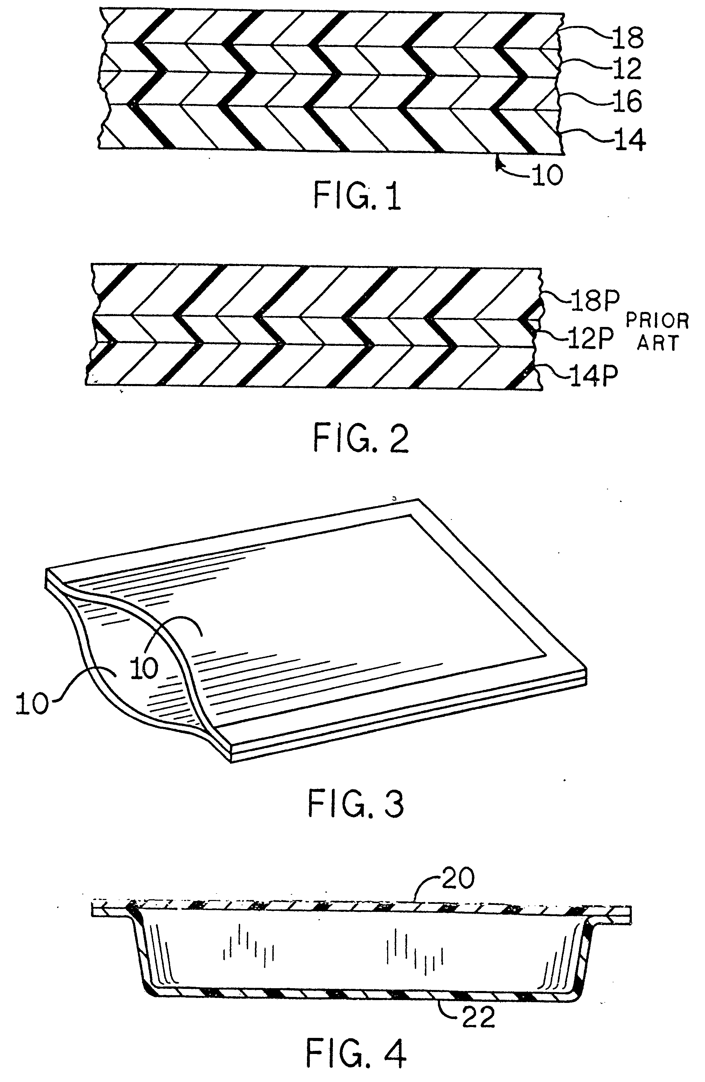

Referring now to FIGURE 1, the overall film of the invention is represented by the numeral 10. Layer 12 is a layer of vinylidene chloride copolymer. Layer 14 is a sealant layer having a softening temperature no lower than about 20°C less than the softening temperature of the vinylidene chloride copolymer of layer 12. Layer 16 has a melting point temperature higher than the melting point temperatures of either layer 12 or layer 14. The composition of layer 16 can be any polymeric material which does not soften enough to flow significantly at the process conditions under which the heat seals are formed. Exemplary of materials which meet this condition, in some cases dependent on the compositions selected for layers 12 and 14, are the polyesters, polycarbonates, polyamides, polypropylenes, and polyethylenes. Among the polyethylenes, high density polyethylene and medium density polyethylene are generally higher softening temperature polymers. Low density polyethylenes may be used where the sealing temperature of the sealant layer 14 is quite low. An especially preferred material for layer 16 is polyethylene terephthalate.

The composition of layer 14, while it includes a high fraction of the higher softening temperature material such as polypropylene or high density polyethylene, may include modifiers, especially those which affect the level of adhesion developed by the sealant layer 14 when the heat seal is formed, and those modifiers which affect the flexural properties of layer 14. Especially, the sealant layer 14 may contain materials which reduce the strength of the heat seal fabricated using layer 14. A composition exemplary of those wherein the strength of the seal formed at seal layer 14 is less than the strength of a seal fabricated from 100% polypropylene polymer, for example, is a blend of 65% to 95% by weight of a polypropylene polymer and conversely 35% to 5% by weight of an ethylene polymer having a density of at least .940. Exemplary of modifiers which affect the flexural properties are the elastomers, such as butylene polymers, i.e. polyisobutylene and ethylene butene-1, especially ethylene butene-1 containing 85 - 95 mole percent ethylene.

Layer 18 generally forms the outer layer of the film as seen in FIGURE 1. Layer 18 is that layer which is in contact with conventional heat sealing equipment when the heat seal is formed by forcing heat through the film to soften and fuse sealant layer 14 in formation of the heat seal. Thus the softening temperature of the composition of layer 18 must be greater than the softening temperature of the composition of layer 14. To the extent the softening temperature of layer 18 is not greater than the softening temperature of layer 14, then the layer 18 composition is softened during the formation of heat seals. As a result, the material from layer 18 may stick or otherwise deform while in contact with the equipment that provides the heat for the formation of heat seals. So long as the composition of layer 18 provides the function of being thermally stable during the formation of the heat seals, its composition can be selected with relative freedom, and dependent on parameters other than its thermal stability. Exemplary of materials preferred for the layer 18 composition are polyesters, polycarbonates, polyamides, and polypropylenes. A highly preferred material for use in layer 18 is polyethylene terephthalate.

Referring now to the prior art structure shown in FIGURE 2, layer 12P is a vinylidene chloride copolymer. Layer 14P is a polypropylene sealant layer. Layer 18P is a layer of polyethylene terephthalate. The prior art structure of FIGURE 2 has the higher softening temperature polyethylene terephthalate on the outer surface of a formed package and the lower softening temperature polypropylene polymer sealant layer on the inner surface of a formed package. The vinylidene chloride copolymer layer is between the polyethylene terephthalate and the polypropylene and is in direct contact with the polypropylene sealant layer.

The films of the invention, as seen in FIGURE 1, specifically provide an intervening layer 16 between the vinylidene chloride copolymer in layer 12 and the sealant layer 14. It is critical that the softening temperature of the composition of layer 16 be great enough that the composition of layer 16 is not melted, or otherwise significantly softened such that it flows, at the conditions at which the heat seal is fabricated in the formation of a package. The heat sealing conditions vary somewhat with each commercial operation, and sometimes with each operator. These variances can readily be accommodated within the spirit and context of the invention.

Comparing, now, the film structures of FIGURES 1 and 2, it is seen that the FIGURE 1 structure is similar to

3

the FIGURE 2 structure, with the distinction being the insertion of the layer 16 between layers 12 and 14. The prior art structure, as illustrated in FIGURE 2, is

|PET|vinylidene chloride copolymer|polypropylene sealant| .

A preferred structure for the films of the invention is

|PET|vinylidene chloride copolymer|PET|polypropylene sealant| .

In this case, where the layer between the vinylidene chloride copolymer and sealant layers is PET, the copolymer is other than vinylidene chloride/vinyl chloride polymer.

While it is seen that the films of the invention comprise four layers as compared to the three layers in the prior art films illustrated in FIGURE 2, the overall amount of material, and thus the thickness of the film, can acceptably be the same. This is accomplished by dividing the amount of material used in the prior art structure in layer 18P into two parts, in making the films of the invention, such that the sum of the thicknesses of layers 16 and 18 in FIGURE 1 (as representative of films of the invention) is the same as the thickness of layer 18P in the prior art structure of FIGURE 2.

Where the adhesion between any two pairs of layers in the film, at the respective interface is anticipated to be less than desired, it is entirely acceptable, and within the context of the invention, to use adhesives to enhance that interlayer adhesion. The adhesives for use between the respective pairs of layers can readily be determined according to ordinary adhesive selection in the polymer industry. Exemplary of adhesives which are acceptable are the aliphatic urethane curing-type adhesives available from Morton Chemical Company under the tradename Adcote. Other adhesives will be known to those skilled in the art.

While it is important to the invention that layer 16 be interposed between layers 12 and 14, the invention is entirely functional if additional layers of material are interposed between layers 12 and 14, so long as the advantageous mechanical strengthening effect of layer 16 is maintained.

Likewise, additional layers may be interposed between layers 12 and 18. Further, it is acceptable for additional layers to be added to the surface of layer 18. In that case, the four layer film illustrated in FIGURE 1 is a substructure of a more complex multiple layer sheet structure. Illustrative of nonpolymeric materials which may be incorporated into the structure as additional layers are paper and metal foil.

## EXAMPLE 1

A four layer film was made as follows. Polyethylene terephthalate films, 0.48 mil thick were adhesively laminated to both sides of a 1 mil thick film of a vinylidene chloride copolymer. The polyethylene terephthalate was Mylar from Dupont. A polypropylene film 3.0 mils thick, obtained from Exxon as Extrel-23 was laminated to one of the Mylar layers, to finish fabrication of the film, to represent the films of the invention, and as seen in FIGURE 1. The melting point temperature of the Extrel-23 according to the DSC curve and ASTM D-3418 was approximately 160°C. The melting point temperature of the vinylidene chloride copolymer was about 160°C. The melting point temperature of the polyethylene terephthalate was about 250°C. The four layer adhesively laminated film was 5.5 mils thick. The adhesive used in the lamination process was Adcote 76T198, which is an aliphatic urethane curing-type adhesive from Morton Chemical Company.

## COMPARATIVE EXAMPLE 1

A three layer film, representative of the prior art, and as shown in FIGURE 2, was made having the same total thickness of the film in EXAMPLE 1. The same vinylidene chloride copolymer film used in EXAMPLE 1 was used to form layer 12P. The same polypropylene sealant layer film was used to form layer 14P. The polyethylene terephthalate film used for layer 18P was about twice as thick, at 0.92 mil, as the polyethylene terephthalate film used in EXAMPLE 1. The polyethylene terephthalate film was laminated on one surface of the vinylidene chloride copolymer film. The polypropylene film was laminated to the other surface of the vinylidene chloride copolymer film. The same adhesives and the same processes were used as in EXAMPLE 1. Thus, the films from both EXAMPLE 1 and COMPARATIVE EXAMPLE 1 incorporated essentially the same amount of each material, and had the same total, overall thickness.

The films of EXAMPLE 1 and COMPARATIVE EXAMPLE 1 were used to provide a closure lid for sealing to semi-rigid trays such as is illustrated as receptacle 22 in FIGURE 4. The tray flange, to which the subject lid material was sealed, was about 50 mils thick, with a sealing surface layer about 10 mils thick and having a composition comprising a blend of 60% polypropylene and 40% high density polyethylene. At its outer periphery, the trays were 6.25 inches long by 4.5 inches wide.

Heat seals were formed by applying heat and pressure using a Raycon vacuum sealer. Sealing pressure was about 45 psi. Dwell time was about 1.25 sec. Before formation of the heat seal, to close the package, as seen in FIGURE 4, 340 milliliters of water was inserted into the tray as content. Finally the lid was applied, and sealed to the tray to form the closed and sealed package. The closed and sealed packages were retort processed at 121°C with 25 psig of pressure for 30 minutes of cook time, followed by 20 minutes of cooling. Come-up time was 15 minutes.

The thus processed sealed packages were subjected to the standard USDA Immediate Container Abuse Test, without overwrap, using a standard drop chute apparatus. This test is intended to simulate dropping of individual packages on a controlled, reproducible basis.

The chute is inclined at an angle of 15° from the vertical and has a rigid base plate at a 90° angle to the chute, also the direction of fall. The chute itself has guide rods or iron corner guides, continuous from the top release point of contact to the base. The chute is fitted with a package release mechanism.

Each package was dropped twice from a height of 38 inches, first on its longer side, and then on its shorter end. Drop height was measured along the chute from point of release of leading edge of the package to the point of impact.

Ninety-eight packages representing COMPARATIVE EXAMPLE 1 and 96 packages representing EXAMPLE 1 were drop tested in the manner described above. Overall, 45% of the packages of COMPARATIVE EXAMPLE 1 failed to survive both drops intact. Only 9% of the packages of EXAMPLE 1 failed to survive both drops intact. Failures typically occurred by splitting of the lid at the inner sealant junction. Further description, including the number of failures resulting from the side drop impact and the number of failures resulting from the end drop impact, is set forth in Table 1.

## TABLE 1

| | EXAMPLE 1 | | COMPARATIVE EXAMPLE 1 | |
|---|---|---|---|---|
| | Number Tested | Percent | Number Tested | Percent |
| Samples Tested | 96 | 100% | 98 | 100% |
| Failures Side | 9 | 9% | 35 | 36% |
| End | 0 | 0 | 9 | 9% |
| Total | 9 | 9% | 44 | 45% |

The test results set forth in Table 1 show that the films of the invention surprisingly have over 75% fewer failures in the illustrated drop test, even though practically identical quantities of identical materials were used in fabricating the two series of packages. Clearly, the film structure results in a closed package having a greater tolerance for shock abuse. It is believed that this increased tolerance of abusive handling is a direct result of the incorporation of the layer 16 material between layers 12 and 14; although the mechanism responsible for the increased tolerance is not fully understood.

The sheet materials of this invention are highly desirable for use as closure members on packages having other sheet structure such as that seen in FIGURE 4, wherein the films of the invention are used to provide a lid 20 on an otherwise formed receptacle 22.

The sheet materials of the invention are also highly satisfactory for use in fabrication of pouches, wherein the films of the invention comprise essentially all the entire wall package structure.

In the prior art structure as seen in FIGURE 2, the application of sufficient heat at layer 18P to soften layer 14P enough to form heat seals, by definition, effects the softening, and perhaps melting, of layer 12P. This is so because layer 12P, like layer 12 in films of the invention, has been defined as having softening properties which cause it to be softened at the conditions which are used for forming the heat seal at layer 14; softened enough that it tends to flow under the combination of temperature and pressure used for forming the heat seals. With both layers 12P and 14P thus softened by the heat applied during formation of the heat seal, pressure applied in formation of the heat seal tends, as a negative side affect, to cause flow of the softened materials away from the area over which the pressure is applied, while the desired seal is being formed. Thus, layers 12P and 14P appear to tend to flow, as a single unit, in the prior art structure of FIGURE 2, away from the area of pressure. The interface of layers 12P and 14P tends to flow accordingly.

Turning now to the films of the invention, wherein layer 16 has been interposed between layers 12 and 14, the melting point temperature of layer 16 is, by definition, higher than the melting point temperature of both of layers 12 and 14. Thus, heat sufficient for softening layer 14 sufficient for formation of heat seals, and which also softens layer 12, does not soften layer 16. With layer 16 being unsoftened, it substantially maintains its dimensional stability under the conditions of formation of heat seals and does not substantially flow or deform. Since layer 16 does not substantially flow or deform, it provides dimensional stability and mechanical strength between the two softened layers 12 and 14.

Thus the functional requirement for layer 16 is that its softening temperature be above the softening temperature of both layer 12 and layer 14. A difference of 5°C is normally adequate. 20°C is preferred, with 35°C being highly preferred.

Similarly, and for purposes of avoiding layer 18 sticking on conventional heat seal equipment used for applying sealing heat, the softening temperature of layer 18 is at least 5°C, preferably at least 20°C, most preferably at least 35°C, above the softening temperature of layer 14.

In four layer films of the invention as illustrated in FIGURE 1, the overall film thickness is typically of the order of 2 - 10 mils, preferably 3 - 6 mils thick.

The temperature of seal equipment applied to the outer layer of the film varies, depending on, among other things the compositions of especially the outer layer which contacts the seal equipment, and the seal layer which forms the seal. Conventional amounts of seal pressure usually are in the range of 40 psi to 90 psi, and commonly 40 psi to 60 psi. Typical dwell time is 0.25 to 2.0 seconds more commonly 1-1.5 seconds.

Thus it is seen that the invention provides an improved multiple layer polymeric film having an interior layer of a vinylidene chloride copolymer in combination with a sealant layer and wherein the sealant layer composition has a softening temperature similar to, or higher than, the softening temperature of the vinylidene chloride copolymer layer. The improved multiple layer films have increased impact resistance at the heat seal locus in a package, while maintaining the ability, in the films, to form strong heat seals.

The films of the invention are provided without significantly increasing the amount, or the cost, of the materials used, or the overall thickness of the films.

In the foregoing disclosure, the sealant has been illustrated as a single layer. In any of the sheet materials of this invention, however, it is contemplated that the sealant can comprise a plurality of layers.

Thus, the sealant can consist of a 3-layer substructure, comprising two layers of polypropylene, optionally elastomer-modified such as with a polyisobutylene or an ethylene butene-1 copolymer containing 85% to 95% (mole) ethylene, and an intervening layer of a blend of polypropylene (40% to 70% by weight, preferably 50% to 60%) and HDPE, the composition of the intervening layer being optionally elastomer-modified (2% by weight up to 40%) such as with a polyisobutylene or an ethylene butene-1 copolymer containing 85% to 95% ethylene. An outer polypropylene sealant layer is subject to contact with other surfaces and objects and so its elastomer-modification content is generally limited to about 10% by weight to avoid tackiness and associated blocking, although up to about 20% can be used with certain elastomers. The interior polypropylene layer is not subject to external contacts, and so may be more highly modified, i.e. up to 30% or 40% modifier, and indeed may take on many of the properties of the impact layer, such that it may assist the latter layer in achieving impact/shock tolerance properties for the sheet material.

Thus the outer layer is specially adapted to creating a strong bond with a facing surface such as the flange of a tray. The intervening layer is especially adapted for cohesive failure when a strong opening force is applied. The interior polypropylene layer is a bridging, compatibilizing or adhesion-promoting layer, or a combination of those, to enhance the interfacing and joining of the sealant structure into the balance of the sheet material. Further, the composition of this interior layer may include an elastomer-providing component which cooperates with the impact layer in providing impact/shock tolerance to the sheet material. Any of the elastomers which are acceptable for use in the impact layer will be acceptable for use in the interior polypropylene layer, albeit usually in a lesser fraction.

## Claims

1. A multiple layer film, comprising:

   (a) a first layer of vinylidene chloride copolymer, said first layer having a first softening temperature;

   (b) a second polymeric sealant layer having a softening temperature no lower than 20°C less than said first softening temperature;

   (c) a third layer, between said first and second layers, said third layer having a softening temperature greater than said first and second mentioned softening temperatures; and

   (d) a fourth polymeric layer having a softening temperature greater than said first and second mentioned softening temperatures, said first layer being between said third and fourth layers, all the layers of said film being adhered respectively to each other, and the first layer being other than vinylidene chloride/vinyl chloride copolymer when the third layer is polyethylene terephthalate.

2. A film according to claim 1, wherein the composition of said third layer is selected from polyesters, polycarbonates, polyamides, polypropylenes, and polyethylenes.

3. A film according to claim 1, wherein the third layer comprises a polymer other than polyethylene terephthalate.

4. A film according to claim 1 or claim 2, wherein the first layer is a vinylidene chloride copolymer other than vinylidene chloride/vinyl chloride copolymer.

5. A film according to any of claims 1 to 4, wherein the composition of said second layer comprises a polypropylene polymer.

6. A film according to any of claims 1 to 5, wherein the composition of said fourth layer is selected from polyesters, polycarbonates, polyamides, and polypropylenes, and is, for example, polyethylene terephthalate.

7. A film according to any preceding claim, wherein said third layer is bonded to said first and second layers.

8. A film according to any of claims 1 to 7, wherein said first layer has first and second opposing surfaces, said third and fourth layers being adhered to said first layer on said first and second opposing surfaces, said third layer having a surface opposing said first layer, said second layer being adhered to said opposing surface of said third layer.

9. A film according to any one of claims 1 to 8, said third softening temperature being at least 5°C greater than said first and second softening temperatures.

10. A film according to any one of claims 1 to 8, said third softening temperature being at least 20°C greater than said first and second softening temperatures.

11. A package made with a film according to any one of claims 1 to 10, wherein said second layer is disposed toward the interior of said package.

7

0302711

FIG. 1

FIG. 2

PRIOR ART

FIG. 3

FIG. 4